# EUROPÄISCHE PATENTANMELDUNG

(11) **EP 3 699 519 A1**
(43) Veröffentlichungstag der Anmeldung: **26.08.2020**
(21) Anmeldenummer: 20154870.8
(22) Anmeldetag: 31.01.2020
(51) Int. Cl.: F25D 11/02, F25D 29/00, F25B 49/02

(54) **KÄLTEGERÄT MIT ZWEI TEMPERATURZONEN UND BETRIEBSVERFAHREN DAFÜR**

(30) Priorität: 22.02.2019 DE 102019202415
(71) Anmelder: BSH Hausgeräte GmbH, 81739 München (DE)
(72) Erfinder: Koch, Alexander, 89231 Neu-Ulm (DE)

(57) **Zusammenfassung**

Ein Kältegerät hat eine erste und eine zweite Lagerzone (1, 2), einen Kältemittelkreislauf zum Kühlen der beiden Lagerzonen (1, 2) auf unterschiedliche Temperaturen, der einen Verdichter (10) zum Umwälzen eines Kältemittels und wenigstens einen ersten Verdampfer (6; 16) aufweist, der als Wärmetauscher zwischen dem Kältemittel als einem ersten Wärmeträgermedium und Luft als einem zweiten Wärmeträgermedium fungiert, einen Ventilator (9), der angeordnet ist, um die Luft zwischen dem ersten Verdampfer (6; 16) und wenigstens der ersten Lagerzone (1) umzuwälzen, einen an dem ersten Verdampfer (6; 16) angeordneten ersten Temperaturfühler (14), einen von dem ersten Temperaturfühler (14) verschiedenen, an der zweiten Lagerzone (2) angeordneten zweiten Temperaturfühler (13) und eine Steuereinheit (12) zum Steuern der Leistung des Verdichters (10) anhand der vom zweiten Temperaturfühler (13) gemessenen Temperatur (T2) und des Durchsatzes wenigstens eines der Wärmeträgermedien durch den Wärmetauscher anhand der vom ersten Temperaturfühler (14) gemessenen Temperatur (T1).

## Beschreibung

Die vorliegende Erfindung betrifft ein Kältegerät, insbesondere Haushaltskältegerät, mit einer ersten und einer zweiten Lagerzone, die auf unterschiedlichen Betriebstemperaturen gehalten werden, typischerweise einem Normalkühlfach und einem Gefrierfach, und ein Verfahren zum Betreiben eines solchen Kältegeräts.

Aus Kostengründen sind solche Kältegeräte oft als sogenannte Einkreisgeräte ausgeführt, bei denen die verschiedenen Lagerzonen durch in einem Kältemittelkreislauf in Reihe hintereinandergeschaltete Verdampfer gekühlt werden. Aufgrund der Hintereinanderschaltung können die Verdampfer nicht unabhängig voneinander mit Kältemittel versorgt werden, und der Betrieb des Kältemittelkreislaufs kann nur anhand einer einzigen gemessenen Temperatur, im Allgemeinen derjenigen der wärmeren Lagerzone, gesteuert werden. Die Lagerzone des stromabwärtigen Verdampfers kann auf einer niedrigeren Temperatur als die des stromaufwärtigen gehalten werden, indem eine Drosselstelle zwischen den Verdampfern im Betrieb eine Druckdifferenz zwischen den Verdampfern aufrechterhält und so im stromabwärtigen Verdampfer eine niedrigere Verdampfungstemperatur als im stromaufwärtigen bewirkt. Umgekehrt kann eine höhere Temperatur in der Lagerzone des stromabwärtigen Verdampfers erreicht werden, indem der Zufluss an flüssigem Kältemittel zu den Verdampfern so bemessen wird, dass er den Bedarf des stromaufwärtigen Verdampfers knapp deckt, so dass nur noch ein kleiner Rest des ursprünglich in den stromaufwärtigen Verdampfer eingespeisten flüssigen Kältemittels den stromabwärtigen Verdampfer erreicht.

Im einen wie im anderen Fall ist das Verhältnis, in dem sich die verfügbare Kühlleistung auf die Lagerzonen verteilt, im Wesentlichen fest. Das tatsächlich benötigte Verteilungsverhältnis ist jedoch in Abhängigkeit von der Umgebungstemperatur variabel. Wenn sich die Umgebungstemperatur der Betriebstemperatur der wärmeren Lagerzone nähert, geht deren Kühlbedarf gegen Null, derjenige der kälteren Lagerzone bleibt aber endlich. Dies hat zur Folge, dass wenn das Kältegerät in einer kalten Umgebung betrieben wird, eine ausreichende Kühlung der kälteren Lagerzone nicht gewährleistet werden kann.

Um diesem Problem abzuhelfen, ist bekannt, eine Heizung in der wärmeren Lagerzone anzubringen und diese bei niedriger Umgebungstemperatur zu betreiben, um so eine zum Kühlen auch der kälteren Lagerzone ausreichende Kühlleistung bereitzustellen. Eine solche Vorgehensweise ist mit den Anforderungen an die Energieeffizienz moderner Kältegeräte nicht mehr vereinbar.

Bei No-Frost-Kältegeräten muss ein Verdampfer in einer von der von ihm gekühlten Lagerzone abgesetzten Lagerkammer untergebracht sein, damit, wenn der Verdampfer zum Abtauen beheizt wird, die freigesetzte Wärme sich nicht in der Lagerzone ausbreitet. Um im Normalbetrieb die Kühlung der Lagerzone zu gewährleisten, ist ein Ventilator vorgesehen, der Luft zwischen der Lagerzone und der Verdampferkammer umwälzt. Bei derartigen No-Frost-Kältegeräten ist ein Temperaturfühler am Verdampfer angebracht, um einen Anstieg der Temperatur über 0°C zu erfassen, der darauf schließen lässt, dass der Verdampfer vollständig abgetaut ist und die Abtauheizung wieder ausgeschaltet werden kann.

Aufgabe der vorliegenden Erfindung ist, bei einem Einkreis-Kombinationskältegerät mit wenigstens zwei unterschiedlich temperierten Lagerzonen mit einfachen, preiswerten Mitteln eine hohe Energieeffizienz zu erreichen.

Die Aufgabe wird gelöst, indem bei einem Kältegerät, insbesondere einem Haushaltskältegerät, mit einer ersten und einer zweiten Lagerzone, einem Kältemittelkreislauf zum Kühlen der beiden Lagerzonen auf unterschiedliche Temperaturen, der einen Verdichter zum Umwälzen eines Kältemittels und wenigstens einen ersten Verdampfer aufweist, der als Wärmetauscher zwischen dem Kältemittel als einem ersten Wärmeträgermedium und Luft als einem zweiten Wärmeträgermedium fungiert, einem Ventilator, der angeordnet ist, um Luft zwischen dem ersten Verdampfer und wenigstens der ersten Lagerzone umzuwälzen, einem an dem ersten Verdampfer angeordneten ersten Temperaturfühler und einem von dem ersten Temperaturfühler verschiedenen, an der zweiten Lagerzone angeordneten zweiten Temperaturfühler einer Steuereinheit nicht nur zum Steuern der Leistung des Verdichters anhand der vom zweiten Temperaturfühler gemessenen Temperatur eingerichtet ist, sondern außerdem eingerichtet ist, den Durchsatz wenigstens eines der Wärmeträgermedien durch den Wärmetauscher anhand der vom ersten Temperaturfühler gemessenen Temperatur zu steuern, und zwar vorzugsweise zwischen mehreren nichtverschwindenden Werten des Durchsatzes zu wählen.

Die Steuerung der Verdichterleistung anhand des zweiten Temperaturfühlers kann auch dann, wenn der Verdichter bei mehreren nichtverschwindenden Drehzahlen oder Leistungen betreibbar ist, vorzugsweise durch Ein- und Ausschalten des Verdichters erfolgen.

Einer ersten Ausgestaltung zufolge kann die Durchsatzsteuerung erfolgen, indem die Steuereinheit die Leistung des Ventilators anhand der vom ersten Temperaturfühler gemessenen Temperatur steuert.

Die Attribute "erster" bzw. "zweiter" beinhalten hier wohlgemerkt keine Aussage über eine Reihen- oder Rangfolge der damit bezeichneten Temperaturfühler, Lagerzonen oder Verdampfer, sondern dienen ausschließlich deren eindeutiger Benennung und Unterscheidung. Insbesondere rechtfertigt die Verwendung des Attributs "erster" für einen Gegenstand nicht die Annahme, dass auch ein zweiter Gegenstand dieser Art existieren müsste; von der Existenz eines solchen zweiten Gegenstandes ist im Folgenden nur dann auszugehen, wenn dieser ausdrücklich genannt ist.

Der erste Temperaturfühler ist bei einem No-Frost-Kältegerät in der Regel ohnehin vorhanden, um eine automatische Beendigung eines Abtauvorgangs zu bewirken. Dieser Temperaturfühler kann daher im Rahmen der vorliegenden Erfindung einer neuen Nutzung zugeführt werden, ohne dass dies den Aufbau des Kältegeräts verkompliziert oder anderweitig den Fertigungsaufwand erhöht. Indem anhand des Messwerts des ersten Temperaturfühlers die Leistung des Ventilators gesteuert wird, kann die Aufteilung der verfügbaren Kühlleistung auf die Lagerzonen beeinflusst werden, und dadurch kann der Bereich der Umgebungstemperaturen vergrößert werden, in dem gewünschte Temperaturen in beiden Lagerzonen aufrechterhalten werden können.

Um eine gewünschte Kühlleistungsverteilung einzustellen, kann die Steuerschaltung die Leistung des Ventilators über ein Tastverhältnis, d.h. ein Verhältnis von Ein- oder Ausschaltzeiten zur Gesamtbetriebszeit des Ventilators beeinflussen. Bevorzugt ist allerdings, dass die Steuerschaltung eingerichtet ist, die Drehzahl des Ventilators unter mehreren nichtverschwindenden Werten auszuwählen. Zum einen ist das Ein- und Ausschalten des Ventilators oft mit hörbaren Betriebsgeräuschen verbunden, die bei kontinuierlichem Betrieb nicht auftreten, zum anderen erleichtert ein kontinuierlicher Betrieb des Ventilators die Abschätzung der Temperatur der ersten Lagerzone, wie im Folgenden noch genauer erläutert wird.

Einer zweiten Ausgestaltung zufolge kann die Steuereinheit eingerichtet sein, den Durchsatz eines Wärmeträgermediums, nämlich des Kältemittels, über die Leistung des Verdichters zu steuern.

Auch die Drehzahl des Verdichters sollte unter mehreren nichtverschwindenden Werten auswählbar sein. So kann zum einen durch Ein- und Ausschalten des Verdichters anhand von Messwerten des zweiten Temperaturfühlers die Kälteerzeugung an den Bedarf der zweiten Lagerzone angepasst werden; indem dann, wenn der Verdichter eingeschaltet ist, eine Auswahl zwischen verschiedenen nichtverschwindenden Drehzahlen stattfindet, kann die Aufteilung der Kühlleistung auf die Lagerzonen beeinflusst werden, denn je höher die Drehzahl, umso größer ist der Druckabfall im Kältemittelkreis und umso niedriger ist die Verdampfungstemperatur im Verdampfer. Wenn Verdampfer von zwei Lagerzonen im Kältemittelkreislauf in Reihe hintereinandergeschaltet sind, kann daher durch Heraufsetzen der Verdichterdrehzahl der Anteil der Kühlleistung, der auf den stromaufwärtigen Verdampfer entfällt, erhöht werden. Solange dieser Verdampfer nicht überläuft, gelangt im Wesentlichen nur Kältemitteldampf in den nachgeschalteten Verdampfer, so dass dessen Kühlleistung nur wenig zunimmt. Ist hingegen der stromaufwärtige Verdampfer so dimensioniert, dass er bei Erhöhen der Verdichterdrehzahl alsbald überläuft, so nimmt der Anteil der verfügbaren Kühlleistung, die auf den stromabwärtigen Verdampfer entfällt, stark zu. D.h. während beim Ventilator eine Drehzahlsteigerung grundsätzlich zu einer stärkeren Kühlung der ersten Lagerzone führt, hängt beim Verdichter die Auswirkung einer Drehzahlsteigerung von den Proportionen der Verdampfer ab.

Auch wenn die vom ersten Temperaturfühler gemessene Temperatur nicht mit der tatsächlichen Temperatur der ersten Lagerzone übereinstimmt, ist sie doch an letztere insoweit gekoppelt, dass sie mit zunehmender Temperatur der Lagerzone zunimmt bzw. bei abnehmender Temperatur der Lagerzone abnimmt. Deswegen sollte die Steuereinheit eingerichtet sein, die Temperatur der ersten Lagerzone anhand der vom ersten Temperaturfühler gemessenen Temperatur und der gemessenen Leistung des Ventilators abzuschätzen und eine Sollleistung des Ventilators heraufzusetzen, wenn die abgeschätzte Temperatur über einem Sollwert liegt bzw. die Solleistung herabzusetzen, wenn die abgeschätzte Temperatur unter einem Sollwert liegt. Der Sollwert kann in beiden Fällen der gleiche sein; vorzugsweise ist er im erstgenannten Fall geringfügig höher als im zweitgenannten, um einen Betrieb des Ventilators ohne ständiges Auf- und Abregeln der Leistung zu ermöglichen.

Je höher die Leistung des Ventilators, umso schneller wird die Luft zwischen der ersten Lagerzone und dem ersten Verdampfer umgewälzt, und umso höher ist deshalb die zu erwartende Abweichung zwischen der vom ersten Temperaturfühler gemessenen Temperatur und der wahren Temperatur der ersten Lagerzone. Dem kann Rechnung getragen werden, indem beim Abschätzen der Temperatur der ersten Lagerzone eine Differenz zwischen dieser und der vom ersten Temperaturfühler gemessenen Temperatur um so höher angenommen wird, je höher die Leistung des Ventilators und/oder des Verdichters ist.

Einer bevorzugten Ausgestaltung der Erfindung zufolge ist ein zweiter Verdampfer zum Kühlen der zweiten Lagerzone im Kältemittelkreislauf mit dem ersten Verdampfer in Reihe verbunden.

Dieser zweite Verdampfer kann dem ersten Verdampfer im Kältemittelkreislauf nachgeschaltet sein, um von letzterem den Rest an flüssigem Kältemittel zu empfangen, der in letzterem noch nicht verdampft ist.

Einer zweiten Ausgestaltung zufolge können beide Lagerzonen durch denselben ersten Verdampfer gekühlt sein. Ein zweiter Verdampfer kann dann entfallen. Stattdessen ist vorzugsweise eine Klappe durch die Steuereinheit zwischen einer Stellung, in der sie die Luftumwälzung zwischen dem ersten Verdampfer und der ersten Lagerzone erlaubt, und einer Stellung, in der sie eine Luftumwälzung zwischen dem ersten Verdampfer und der zweiten Lagerzone erlaubt, umschaltbar, um jeweils nach entsprechend dem mit Hilfe der Temperaturfühler ermittelten Bedarf eine der Lagerzonen mit Kaltluft aus der Verdampferkammer zu versorgen.

Die Steuereinheit ist vorzugsweise eingerichtet, die Temperatur der ersten Lagerzone anhand der vom ersten Temperaturfühler gemessenen Temperatur und der gemessenen Leistung des Ventilators abzuschätzen. Dabei kann davon ausgegangen werden, dass die Abweichung zwischen der gemessenen Temperatur und der Temperatur der ersten Lagerzone umso größer ist, je stärker der Wärmefluss über den Verdampfer ist.

Dem ersten Verdampfer kann eine Abtauheizung zugeordnet sein.

Die Steuereinheit sollte dann eingerichtet sein, die Abtauheizung abzuschalten, wenn die vom ersten Temperaturfühler gemessene Temperatur über einen Grenzwert, typischerweise knapp über 0°C, steigt.

Da die Platzierung des ersten Temperaturfühlers am ersten Verdampfer fest ist, der Wärmefluss zwischen dem ersten Verdampfer und der umgewälzten Luft aber je nach Menge des Reifs auf dem Verdampfer variiert, wird die Reifmenge auch einen Einfluss auf die vom ersten Temperaturfühler gemessene Temperatur haben. Deswegen sollte die Steuereinheit eingerichtet sein, beim Abschätzen der Temperatur der ersten Lagerzone eine Menge des auf dem ersten Verdampfer abgeschiedenen Reifs zu berücksichtigen. Dies kann auf diversen Wegen geschehen, z.B. kann eine feste Zuwachsrate des Reifs seit dem letzten Abtauen angenommen werden, eine von der Anzahl an Türöffnungen (und der damit verbundenen Zufuhr von Feuchtigkeit zur ersten Lagerzone) verknüpfte Zuwachsrate, die Position einer Oberfläche der Reifschicht kann auf optischem Wege, über einen kapazitiven Näherungsschalter oder dergleichen erfasst werden.

Um die mit zunehmender Schichtdicke des Reifs zunehmende Isolationswirkung zu berücksichtigen, sollte insbesondere der Offsetwert umso größer gewählt werden, je länger ein letztes Abtauen des ersten Verdampfers zurückliegt.

Die Aufgabe wird ferner gelöst durch ein Verfahren zum Betreiben eines Kältegeräts mit einer ersten und einer zweiten Lagerzone, einem Kältemittelkreislauf zum Kühlen der beiden Lagerzonen auf unterschiedliche Temperaturen, der einen Verdichter und wenigstens einen ersten Verdampfer aufweist, einem Ventilator, der angeordnet ist, um Luft zwischen dem ersten Verdampfer und wenigstens der ersten Lagerzone umzuwälzen, mit den Schritten:
a) Messen der Leistung des Ventilators,
b) anhand der gemessenen Leistung, Abschätzen eines Sollwerts für die vom ersten Temperaturfühler gemessene Temperatur;
c) Vergleichen der tatsächlich vom ersten Temperaturfühler gemessenen Temperatur mit dem Sollwert; und
d) Heraufsetzen der Leistung des Ventilators, wenn die gemessene Temperatur höher als der Sollwert ist, und/oder Herabsetzen der Leistung des Ventilators, wenn die gemessene Temperatur niedriger als der Sollwert ist.

Weitere Merkmale und Vorteile der Erfindung ergeben sich aus der nachfolgenden Beschreibung von Ausführungsbeispielen unter Bezugnahme auf die beigefügten Zeichnungen. Es zeigen:
- Fig. 1: einen schematischen Schnitt durch ein Haushaltskältegerät gemäß einer ersten Ausgestaltung der Erfindung;
- Fig. 2: ein Flussdiagramm eines von einer Steuereinheit des Geräts aus Fig. 1 ausgeführten Arbeitsverfahrens;
- Fig. 3: einen schematischen Schnitt durch ein Haushaltskältegerät gemäß einer zweiten Ausgestaltung der Erfindung; und
- Fig. 4: ein Flussdiagramm eines von einer Steuereinheit des Geräts aus Fig. 3 ausgeführten Arbeitsverfahrens.

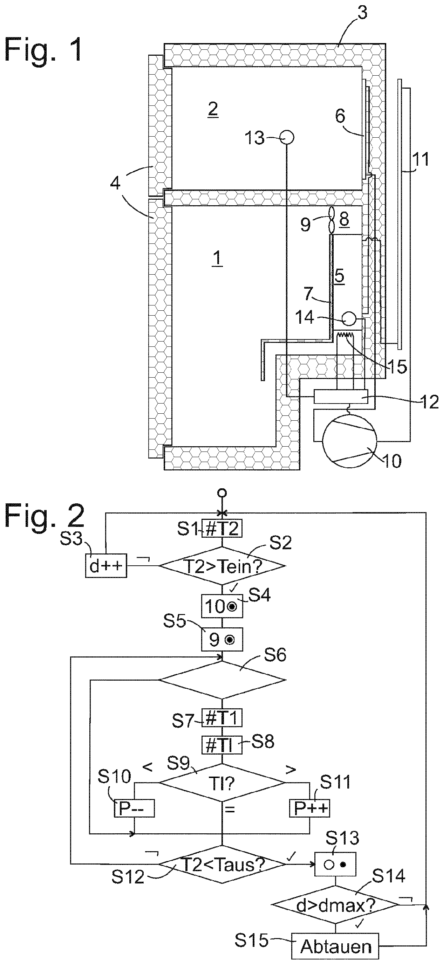

Fig. 1 zeigt ein Kombinationskältegerät mit einer kalten und einer warmen Lagerzone 1, 2, z.B. einem Gefrierfach 1 und einem Normalkühlfach 2, die in einem wärmeisolierten Korpus 3 ausgespart und jeweils durch eine Tür 4 verschließbar sind. Jeder der Lagerzonen 1, 2 ist ein Verdampfer 5, 6 zugeordnet. Der Verdampfer 5 des Gefrierfachs 1 ist ein No-Frost-Verdampfer, der in einer von dem Gefrierfach 1 durch eine Zwischenwand 7 abgetrennten Verdampferkammer 8 untergebracht ist. An einem Durchgang der Zwischenwand 7 ist ein Ventilator 9 angebracht, um den Luftaustausch zwischen dem Gefrierfach 1 und der Verdampferkammer 8 zu beschleunigen. Der Verdampfer 6 des Normalkühlfachs kann von beliebiger Bauart sein; vorzugsweise ist er ein Plattenverdampfer, der zwischen einem Innenbehälter des Korpus 3 und einer den Innenbehälter umgebenden wärmedämmenden Schaumstoffschicht eingebettet ist.

In einem Kältemittelkreislauf des Kältegeräts sind ausgehend von einem Druckanschluss eines Verdichters 10 in Reihe hintereinandergeschaltet: ein Verflüssiger 11, eine Drosselstelle, der Verdampfer 5, der Verdampfer 6 und ein Sauganschluss des Verdichters 10.

Eine elektronische Steuereinheit 12 steuert den Betrieb des Verdichters 10 und des Ventilators 9 anhand von Messwerten, die von Temperaturfühlern 13, 14 geliefert werden. Der Temperaturfühler 13 ist an der warmen Lagerzone 2 angeordnet, um einen für die darin herrschende Lufttemperatur repräsentativen Messwert zu liefern. Zu diesem Zweck kann der Temperaturfühler 13 entfernt vom Verdampfer 6 an einer Wand der Lagerzone montiert sein; typischerweise ist er an einer Seitenwand der Lagerzone 2 zwischen Innenbehälter und Schaumstoffschicht eingebettet.

Der Temperaturfühler 14 ist innerhalb der Verdampferkammer 8, vorzugsweise in unmittelbarem physischem Kontakt mit dem Verdampfer 5, montiert, um einen für die Temperatur des Verdampfers 5 repräsentativen Messwert zu liefern. Typischerweise ist der Temperaturfühler 14 an einer von der durch die Verdampferkammer 8 zirkulierenden Luft überstrichenen Oberfläche, z.B. einer Lamelle, des Verdampfers 5 montiert. Er könnte sich auch an einer von einer solchen Oberfläche abgewandten Seite einer Lamelle befinden; im einen wie im anderen Fall ist liegt die Temperatur, die der Temperaturfühler 14 erfasst, zwischen der Verdampfungstemperatur des Kältemittels im Innern des Verdampfers 5 und der Temperatur der über den Verdampfer 5 hinwegstreichenden Luft. Letztere ist im Allgemeinen umso kälter, je länger sie Gelegenheit hat, Wärme an den Verdampfer abzugeben, d.h. je langsamer sie vom Ventilator 9 umgewälzt wird. Die gemessene Temperatur liegt umso näher an der Verdampfungstemperatur, je dicker eine auf dem Verdampfer niedergeschlagene und ihn von der zirkulierenden Luft isolierende Reifschicht ist.

Fig. 2 beschreibt ein Arbeitsverfahren der Steuereinheit 12. Es wird angenommen, dass zu Beginn des Verfahrens der Verdichter 10 ausgeschaltet ist. Ein aktueller Messwert T2 des Temperaturfühlers 13 wird in Schritt S1 eingelesen und in Schritt S2 mit einem Einschaltschwellwert Tein verglichen. Wenn T2<Tein, bleibt der Verdichter 10 ausgeschaltet, ein Schätzwert d für die Dicke der Reifschicht auf dem Verdampfer 6 wird in beliebiger an sich bekannter Weise aktualisiert (S3), und nach einer vorgegebenen Wartezeit kehrt das Verfahren zu Schritt S1 zurück.

Wenn T2>Tein, dann besteht Kühlbedarf in der warmen Lagerzone 2, und der Verdichter 10 wird in Schritt S4 eingeschaltet. Die Drehzahl des Verdichters 10 kann variabel sein; in dem Fall wird bei Inbetriebnahme des Verdichters 10 eine in einer vorhergehenden Iteration des Verfahrens festgelegte Drehzahl eingestellt.

Gleichzeitig mit dem Verdichter 10 oder kurz danach wird der Ventilator 9 mit einer in einer vorhergehenden Iteration des Verfahrens festgelegten Drehzahl in Betrieb genommen (S5).

Anschließend wird in Schritt S6 überprüft, ob seit dem Einschalten eine Wartezeit verstrichen ist. Die Dauer der Wartezeit kann fest vorgegeben oder proportional zur in Schritt S3 abgeschätzten Schichtdicke sein, um der Tatsache Rechnung zu tragen, dass die Zeit zwischen dem Einschalten des Verdichters und der Ausbildung eines stabilen Temperaturgradienten zwischen dem Verdampfer 5 und der darüber strömenden Luft mit der Dicke der Reifschicht zunimmt. Wenn nicht, geht das Verfahren unmittelbar weiter zu Schritt S12, wenn ja, dann werden ein aktueller Messwert T1 des Temperaturfühlers 13 sowie Messwerte von Drehzahl oder Leistung des Ventilators 9 und, sofern der Verdichter 10bei unterschiedlichen nichtverschwindenden Drehzahlen betreibbar ist, Messwerte von Drehzahl oder Leistung des Verdichters 10 eingelesen (S7).

Die Temperatur T1 liegt zwischen der Verdampfungstemperatur des Kältemittels im Verdampfer 5 und der Temperatur TI der aus der kalten Lagerzone 1 angesaugten Luft. Ihr Wert hängt ab von der Lufttemperatur TI, dem Durchsatz oder Massenstrom der Luft durch die Verdampferkammer (und damit letztlich von Leistung oder Drehzahl des Ventilators 9) sowie vom Durchsatz oder Massenstrom des Kältemittels (und damit letztlich von Leistung oder Drehzahl des Verdichters 10), sowie ggf. von der Dicke d der Reifschicht auf dem Verdampfer 5. Der Zusammenhang zwischen diesen Parametern und der Temperatur T1 ist in einer Tabelle hinterlegt, auf die die Steuereinheit 12 zugreift. Die Tabelle kann anhand von Simulationsrechnungen oder von Messungen an einem Prototyp erstellt sein und ermöglicht der Steuereinheit eine Abschätzung der Lufttemperatur TI anhand der in Schritt S7 eingelesenen Messwerte und ggf. der Schichtdicke d (S8).

Anstatt zwischen dem Einschalten des Verdichters 10 und dem Erfassen des Messwerts T1 eine Wartezeit einzuhalten, kann T1 auch nach dem Einschalten des Verdichters 10 fortlaufend gemessen werden, und aus einem dabei beobachteten Konvergieren des Messwerts kann gefolgert werden, dass der stabile Temperaturgradient erreicht ist. Gleichzeitig aus der dafür benötigten Zeit auf die Dicke d der Reifschicht geschlossen werden.

Die in Schritt S8 berechnete Lufttemperatur TI wird in Schritt S9 mit einem Sollwert oder einem Sollintervall der Temperatur für die Lagerzone 1 verglichen. Bei Übereinstimmung mit dem Sollwert oder-intervall sind die Drehzahlen von Verdichter 10 und Ventilator 9 ideal aufeinander abgestimmt und bleiben unverändert. Liegt die Lufttemperatur TI unter dem Sollwert oder-intervall, dann ist offenbar die Temperatur in der Lagerzone 1 niedriger als nötig; in diesem Fall wird in Schritt S10 die auf die Lagerzone 1 entfallende Kühlleistung herabgesetzt; liegt sie über dem Sollwert oder-intervall, dann ist die Lagerzone 1 zu warm, und die Kühlleistung wird in Schritt S11 heraufgesetzt.

In Schritt S12 wird die Temperatur der warmen Lagerzone 2 erneut gemessen und mit einer Ausschaltschwelle Taus verglichen. Liegt die gemessene Temperatur über der Ausschaltschwelle, dann bleiben Verdichter 10 und Ventilator 9 in Betrieb, und das Verfahren kehrt zurück zu S6 zurück. Anderenfalls werden Verdichter 10 und Ventilator 9 in Schritt S13 ausgeschaltet.

Die abgeschätzte Dicke d der Reifschicht wird mit einem Grenzwert verglichen (S14). Ist dieser noch nicht erreicht, geht das Verfahren direkt zurück zu Schritt S1; anderenfalls wird vorher ein Abtauvorgang durchgeführt, d.h. eine Abtauheizung 15 wird solange betrieben, bis die Temperatur des Temperaturfühlers 14 einen Grenzwert knapp über 0°C überschreitet, und anschließend kehrt das Verfahren zum Ausgang S1 zurück.

Eine Möglichkeit, die Kühlleistung in den Schritten S10 und S11 herab- bzw. heraufzusetzen, ist das Verändern der Leistung bzw. der Drehzahl des Ventilators 9. Je höher diese ist, um so kürzer ist die Zeit, in der die Luft am Verdampfer 10 vorbeistreicht, und umso größer ist die Temperaturdifferenz zwischen der Luft und der Siedetemperatur des Kältemittels im Verdampfer. Entsprechend dem hohen Temperaturgefälle nimmt auch die Wärmeaustauschleistung zu. D.h. um die Kühlleistung herab- bzw. heraufzusetzen, genügt es, die Drehzahl des Ventilators 9 zu de- bzw. inkrementieren. Eine solche De- oder Inkrementierung kann während einer Einschaltphase des Ventilators 9 ein- oder mehrmals wiederholt werden, um die Verteilung der Kühlleistung auf die Lagerzonen 1, 2 an deren jeweiligen Bedarf anzupassen; die Drehzahlanpassung kann sich aber auch auf mehrere Einschaltphasen des Ventilators 9 verteilen, da dieser zu Beginn einer Einschaltphase jeweils mit derjenigen Soll-Drehzahl in Betrieb genommen wird, die an Ende der vorhergehenden Einschaltphase gegolten hat. Als Verdichter 10 kann in diesem Fall ein einfacher Verdichter verwendet werden, der nur zwischen einem Ausschaltzustand und einem Einschaltzustand mit fester Drehzahl umschaltbar ist.

Wenn der Verdichter 10 ein Verdichter mit variabler Drehzahl ist, dann kann eine Veränderung der Kühlleistung auch über eine Veränderung der Verdichterdrehzahl herbeigeführt werden. Eine Steigerung der Drehzahl des Verdichters führt einerseits zu einer Erhöhung des Massenstroms des Kältemittels, so dass pro Zeiteinheit mehr flüssiges Kältemittel zur Verfügung steht, zum anderen führt sie zu einer Verringerung des Drucks - und damit der Verdampfungstemperatur - in den Verdampfern 5, 6. D.h., wenn man davon ausgeht, dass der stromaufwärtige Verdampfer 5 nicht vollständig mit flüssigem Kältemittel gefüllt ist, dann führt eine Steigerung der Verdichterdrehzahl einerseits zu einem Mehrangebot an flüssigem Kältemittel, andererseits zu einer Absenkung der Verdampfungstemperatur. Beides hat zur Folge, dass die Kühlleistung des Verdampfers 5 wesentlich schneller mit der Drehzahl des Verdichters 10 zunimmt als die des Verdampfers 6. Deswegen kann das Verfahren der Fig. 2 grundsätzlich auch angewandt werden, um anstatt der Drehzahl des Ventilators 9 die des Verdichters 10 zu steuern.

Wenn allerdings das Mehrangebot an flüssigem Kältemittel so groß wird, dass es den Verdampfer 5 komplett füllt und in den Verdampfer 6 überläuft, dann hat eine weitere Steigerung der Verdichterdrehzahl keinen nennenswerten Einfluss mehr auf die Kühlleistung des Verdampfers 5; stattdessen nimmt die des Verdampfers 6 stark zu. Würde man in diesem Fall bei zu hoher Temperatur T1 die Drehzahl weiter erhöhen, dann würde dies zu einem "Umkippen" des Systems führen; weil immer mehr flüssiges Kältemittel den Verdampfer 6 erreicht und so zu immer kürzeren Einschaltphasen des Verdichters 10 und einer dadurch immer unzureichenderen Kühlung der kalten Lagerzone 1 führt.

Deswegen ist es bevorzugt, beide Ansätze zu kombinieren, indem eine Anpassung der Drehzahl solange beim Ventilator 9 vorgenommen wird, wie dessen Drehzahl in einem vorgegebenen Intervall liegt, und nur bei Erreichen einer Grenze dieses Intervalls auf eine Drehzahlanpassung am Verdichter 10 ausgewichen wird.

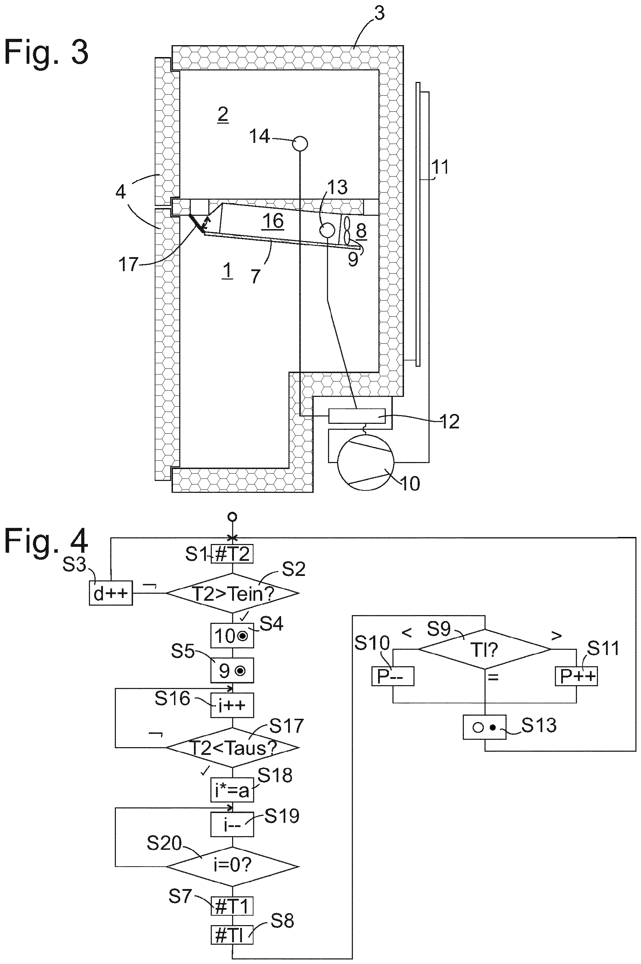

Fig. 3 zeigt eine zweite Ausgestaltung eines erfindungsgemäßen Kältegeräts. Das Kältegerät hat wieder eine kalte und eine warme Lagerzone 1, 2 in einem wärmeisolierten Korpus 3, aber beide Lagerzonen sind von einem gemeinsamen No-Frost-Verdampfer 16 gekühlt. Um dessen Kühlleistung auf die beiden Lagerzonen 1, 2 zu verteilen, ist eine Klappe 17 unter Kontrolle der Steuereinheit zwischen zwei Stellungen beweglich, in denen Luftzirkulation zwischen der Verdampferkammer 8 und jeweils nur einer der Lagerzonen 1, 2 möglich ist. Temperaturfühler 13, 14 sind wie im Falle der Fig.1 an der Lagerzone 2 bzw. am Verdampfer 16 vorgesehen.

Die Schritte S1-S5 eines von der Steuereinheit 12 ausgeführten Arbeitsverfahrens sind dieselben wie im Falle der Fig. 2 und werden nicht erneut beschrieben. Die Klappe 17 kann bei Inbetriebnahme des Verdichters und des Ventilators in S4 und S5 eine beliebige der zwei Stellungen einnehmen; im Folgenden wird angenommen, dass die eingenommene Stellung Zirkulation nur zwischen der Verdampferkammer 8 und der warmen Lagerzone 2 erlaubt. Durch regelmäßiges Inkrementieren eines Zählers (S16) wird die Zeit gemessen, die benötigt wird, bis die Temperatur in der Lagerzone wieder unter Taus gefallen ist (S17).

Diese Zeit i wird mit einem vorgegebenen Faktor a multipliziert, um die anschließende Laufzeit des Verdichters 10 bei in die jeweils andere Stellung umgeschalteter Klappe 17 festzulegen (S18). Anschließend wird der Zähler i in regelmäßigen Zeitabständen dekrementiert, bis er wieder den Wert 0 erreicht (S20). Die darauf folgenden Schritte S7 des Messens der Temperatur T1 durch den Temperaturfühler 14 (S21), des Berechnens der Lufttemperatur TI (S8) und des Vergleichens (S9) sind mit denen der Fig. 2 identisch. Zum Anpassen der auf die Lagerzone 1 ohne eigenen Temperaturfühler entfallenden Kühlleistung in den Schritten S10 bzw. S11 gibt es die bereits oben beschriebenen Möglichkeiten des Anpassens der Drehzahl des Ventilators 9 und/oder des Verdichters 10. Zusätzlich oder alternativ besteht die Möglichkeit, in den Schritten S10, S11 den Faktor a anzupassen, d.h. diesen zu inkrementieren, wenn die Temperatur TI oberhalb des Sollintervalls liegt bzw. ihn zu dekrementieren, falls die Temperatur TI unterhalb des Sollintervalls liegt. Anschließend werden der Verdichter 10 und der Ventilator S9 lange ausgestellt (S13), und das Verfahren kehrt zu Schritt S1 zurück.

### BEZUGSZEICHEN

- 1: (kalte) Lagerzone
- 2: (warme) Lagerzone
- 3: Korpus
- 4: Tür
- 5: Verdampfer
- 6: Verdampfer
- 7: Zwischenwand
- 8: Verdampferkammer
- 9: Ventilator
- 10: Verdichter
- 11: Verflüssiger
- 12: Steuereinheit
- 13: Temperaturfühler
- 14: Temperaturfühler
- 15: Abtauheizung
- 16: Verdampfer
- 17: Klappe

## Patentansprüche

1. Kältegerät, insbesondere Haushaltskältegerät, mit einer ersten und einer zweiten Lagerzone (1, 2), einem Kältemittelkreislauf zum Kühlen der beiden Lagerzonen (1, 2) auf unterschiedliche Temperaturen, der einen Verdichter (10) zum Umwälzen eines Kältemittels und wenigstens einen ersten Verdampfer (6; 16) aufweist, der als Wärmetauscher zwischen dem Kältemittel als einem ersten Wärmeträgermedium und Luft als einem zweiten Wärmeträgermedium fungiert, einem Ventilator (9), der angeordnet ist, um die Luft zwischen dem ersten Verdampfer (6; 16) und wenigstens der ersten Lagerzone (1) umzuwälzen, einem an dem ersten Verdampfer (6; 16) angeordneten ersten Temperaturfühler (14), einem von dem ersten Temperaturfühler (14) verschiedenen, an der zweiten Lagerzone (2) angeordneten zweiten Temperaturfühler (13) und einer Steuereinheit (12) zum Steuern der Leistung des Verdichters (10) anhand der vom zweiten Temperaturfühler (13) gemessenen Temperatur (T2), **dadurch gekennzeichnet, dass** die Steuereinheit (12) eingerichtet ist, den Durchsatz wenigstens eines der Wärmeträgermedien durch den Wärmetauscher anhand der vom ersten Temperaturfühler (14) gemessenen Temperatur (T1) zu steuern.

2. Kältegerät nach Anspruch 1, **dadurch gekennzeichnet, dass** das die Steuereinheit (12) eingerichtet ist, den Durchsatz über die Leistung des Ventilators (9) zu steuern (S10, S11).

3. Kältegerät nach Anspruch 2, **dadurch gekennzeichnet, dass** die Steuerschaltung eingerichtet ist, die Drehzahl des Ventilators (9) unter mehreren nichtverschwindenden Werten auszuwählen (S10, S11).

4. Kältegerät nach einem der vorhergehenden Ansprüche, **dadurch gekennzeichnet, dass** die Steuereinheit (12) eingerichtet ist, den Durchsatz über die Leistung des Verdichters (10) zu steuern (S10, S11).

5. Kältegerät nach Anspruch 4, **dadurch gekennzeichnet, dass** die Steuerschaltung (12) eingerichtet ist, die Drehzahl des Verdichters (10) unter mehreren nichtverschwindenden Werten auszuwählen (S10, S11).

6. Kältegerät nach einem der vorhergehenden Ansprüche, **dadurch gekennzeichnet, dass** die Steuereinheit eingerichtet ist, die Temperatur der ersten Lagerzone (1) anhand der vom ersten Temperaturfühler (14) gemessenen Temperatur (T1) und der gemessenen Leistung des Ventilators (9) und/oder des Verdichters (10) abzuschätzen und eine Sollleistung des Ventilators (9) oder des Verdichters (10) heraufzusetzen (S11), wenn die abgeschätzte Temperatur (TI) über einem Sollwert liegt und die Solleistung herabzusetzen (S11), wenn die abgeschätzte Temperatur (TI) unter einem Sollwert liegt.

7. Kältegerät nach Anspruch 6, **dadurch gekennzeichnet, dass** die Steuereinheit (12) eingerichtet ist, beim Abschätzen der Temperatur (TI) der ersten Lagerzone (1) eine Differenz zwischen dieser und der vom ersten Temperaturfühler (14) gemessenen Temperatur (T1) um so höher anzunehmen, je höher die Leistung des Ventilators(9) und/oder des Verdichters (10) ist.

8. Kältegerät nach einem der Ansprüche 1 bis 7, **dadurch gekennzeichnet, dass** ein zweiter Verdampfer (6) zum Kühlen der zweiten Lagerzone (2) im Kältemittelkreislauf mit dem ersten Verdampfer (5) in Reihe verbunden ist.

9. Kältegerät nach Anspruch 8, **dadurch gekennzeichnet, dass** der zweite Verdampfer (6) dem ersten Verdampfer (5) im Kältemittelkreislauf nachgeschaltet ist.

10. Kältegerät nach einem der Ansprüche 1 bis 7, **dadurch gekennzeichnet, dass** wenigstens eine Klappe (17) durch die Steuereinheit (12) zwischen einer Stellung, in der sie die Luftumwälzung zwischen dem ersten Verdampfer (16) und der ersten Lagerzone (1) erlaubt, und einer Stellung, in der sie eine Luftumwälzung zwischen dem ersten Verdampfer (16) und der zweiten Lagerzone (2) erlaubt, umschaltbar ist.

11. Kältegerät nach einem der vorhergehenden Ansprüche, **dadurch gekennzeichnet, dass** dem ersten Verdampfer (5) eine Abtauheizung (15) zugeordnet ist und dass eine Steuereinheit (12) eingerichtet ist, die Abtauheizung (15) abzuschalten, wenn die vom ersten Temperaturfühler (14) gemessene Temperatur (T1) über einen Grenzwert steigt.

12. Kältegerät nach einem der vorhergehenden Ansprüche, **dadurch gekennzeichnet, dass** die Steuereinheit (12) eingerichtet ist, beim Abschätzen der Temperatur (TI) der ersten Lagerzone (1) eine Menge des auf dem ersten Verdampfer (5) abgeschiedenen Reifs zu berücksichtigen.

13. Kältegerät nach Anspruch 7, **dadurch gekennzeichnet, dass** die Steuereinheit (12) eingerichtet ist, den Offsetwert umso größer zu wählen, je länger ein letztes Abtauen des ersten Verdampfers (5) zurückliegt.

14. Verfahren zum Betreiben eines Kältegeräts mit einer ersten und einer zweiten Lagerzone (1, 2), einem Kältemittelkreislauf zum Kühlen der beiden Lagerzonen (1, 2) auf unterschiedliche Temperaturen, der einen Verdichter (10) und wenigstens einen ersten Verdampfer (5, 16) aufweist, einem Ventilator (9), der angeordnet ist, um Luft zwischen dem ersten Verdampfer (5, 16) und wenigstens der ersten Lagerzone (1) umzuwälzen, mit den Schritten:
a) Messen der Leistung des Ventilators (9) und/oder des Verdichters (10),
b) anhand der gemessenen Leistung, Abschätzen eines Sollwerts für die vom ersten Temperaturfühler (14) gemessene Temperatur (T1);
c) Vergleichen (S9) der tatsächlich vom ersten Temperaturfühler (14) gemessenen Temperatur (T1) mit dem Sollwert; und
d) Heraufsetzen (S11) der Leistung des Ventilators (9) und/oder des Verdichters (10), wenn die gemessene Temperatur (T1) höher als der Sollwert ist, und/oder Herabsetzen (S10) der Leistung des Ventilators (9) und/oder des Verdichters (10), wenn die gemessene Temperatur (T1) niedriger als der Sollwert ist.
